Europäisches Patentamt

(19) European Patent Office

Office européen des brevets

(11) Publication number: **0 013 097**
**B1**

(12) **EUROPEAN PATENT SPECIFICATION**

(45) Date of publication of patent specification: **15.02.84**

(21) Application number: **79302871.3**

(22) Date of filing: **12.12.79**

(51) Int. Cl.³: **G 05 D  23/275,**
**F 16 K  31/00, F 01 P  7/00,**
**H 01 H  37/00**

(54) **Temperature actuated fluid control valve.**

(30) Priority: **29.12.78 US  974449**

(43) Date of publication of application:
**09.07.80 Bulletin 80/14**

(45) Publication of the grant of the patent:
**15.02.84 Bulletin 84/7**

(84) Designated Contracting States:
**AT BE CH DE FR GB IT NL SE**

(56) References cited:
**DE - B - 2 355 447**
**US ᵉ A - 3 613 041**
**US - A - 3 853 269**
**US - A - 3 955 760**
**US - A - 4 065 052**
**US - A - 4 176 784**
**US - E - 26 840**

(73) Proprietor: **Kysor Industrial Corporation**
**1 Madison Avenue**
**Cadillac Michigan (US)**

(72) Inventor: **Monigold, Larry Edwin**
**5652 East Blossom**
**Cadillac, Michigan (US)**
Inventor: **Cadwell, Ronald G.**
**712 Holly Road**
**Cadillac, Michigan (US)**

(74) Representative: **Robinson, Anthony John Metcalf**
**et al,**
**30 John Street**
**London, WC1N 2DD (GB)**

Courier Press, Leamington Spa, England.

Temperature actuated fluid control valve

This invention relates to a temperature actuated control device that sequentially controls functions by sequentially actuating a fluid flow valve and electrical switching means in the device.

Vehicle engines, particularly truck engines, are highly sensitive to internal temperature conditions for optimum operational characteristics and exposure to potential overheating damage. Consequently, temperature sensitive controls and alarms have been developed to regulate, monitor, and alert the driver to engine temperature conditions. Examples of such devices are set forth in US patents Re.26,840, 3,613,041 and 3,853,269. The control valves in U.S. patents Re.26,840 and 3,853,269 typically operate shutters of the type for example in patent US 3,198,298 or air operated fan drives that govern air flow through the radiator. US patent 3,759,056 is of interest in this connection. The device in US patent 3,613,041 electrically activates an electromagnetic fan drive or an alarm or shuts down the engine in the event of overheating. The control valves respond at a lower temperature than the alarm or shut down devices. Sometimes only one of these devices is used on an engine. However, both types can be employed on the same engine by providing two or three ports in the engine for insertion of a pair of more of temperature sensitive elements into the coolant jacket. In this event, efforts are made to preset carefully these independently functioning devices to try to minimise any interference between them.

In US Patent 4065052, there is described a thermostatically operated dual action control mechanism for controlling fluid actuable devices such as the shutter and the fan clutch in the cooling of a diesel engine. A valve rod is movable between a first and second position in order to actuate the devices sequentially, so that as the engine heats a fluid actuated mechanism opens the shutter and then an electrical limit switch operates a solenoid valve to actuate the fan clutch.

This construction suffers the disadvantage that the control fluid may be liable to penetrate and so destroy the switch.

It is an object of the present invention to provide a sequentially-operating temperature sensitive control valve which is not susceptible to damage by the control fluid which operates it.

According to the invention, a temperature sensitive control device comprises a body having a temperature sensitive element at one end including an actuator extending into the body, a fluid flow control valve in the body operable by the actuator and being in communication with a fluid inlet port and a fluid outlet port to control a fluid function, and an electrical switch mechanism in the body operable to control an electrical function, the valve being arranged to cause coupling means between the valve and the switch mechanism to actuate the switch mechanism sequentially to the operation of the valve, characterised in that the coupling means comprises a shiftable plunger which physically and sealingly separates the valve from the switch mechanism.

Thus it may be seen that the invention provides a control device that sequentially controls temperature regulators, for example in an engine, first by fluid flow control and then subsequently by electrical circuit control. Each step uses the same temperature sensitive element as an actuator. The same valve which is responsive to the temperature sensitive element achieves fluid flow control and then causes activation of the electrical switch mechanism.

Preferably the valve is a ball valve including a valve seat and a ball valve element for example a ball shiftable by a slide pin to control fluid flow at the valve. The valve element is then preferably arranged to shift the plunger. The plunger may cause one or more electrical contacts in electrical connection with the plunger to engage one or more corresponding contacts supported by the body of the device.

Preferably the device includes biasing means, for example a spring, arranged to bias the plunger away from the switch assembly and into engagement with the valve element, thereby also biasing the valve element towards the valve seat.

The invention may be carried into practice in various ways and three embodiments will be described by way of example with reference to the accompanying drawings in which:—

Figure 1 is an elevation of the first embodiment of the control device of the present invention;

Figure 2 is a view similar to Figure 1 but partly in section and to a larger scale;

Figure 3 is a view similar to Figure 2 showing the second embodiment device of the present invention the portion in section being on the line III—III in Figure 4;

Figure 4 is a plan of the device of Figure 3;

Figure 5 is a view similar to Figure 2 showing the third embodiment of the device of the present invention, the portion in section being on the V—V in Figure 6, and

Figure 6 is a plan of the device in Figure 5.

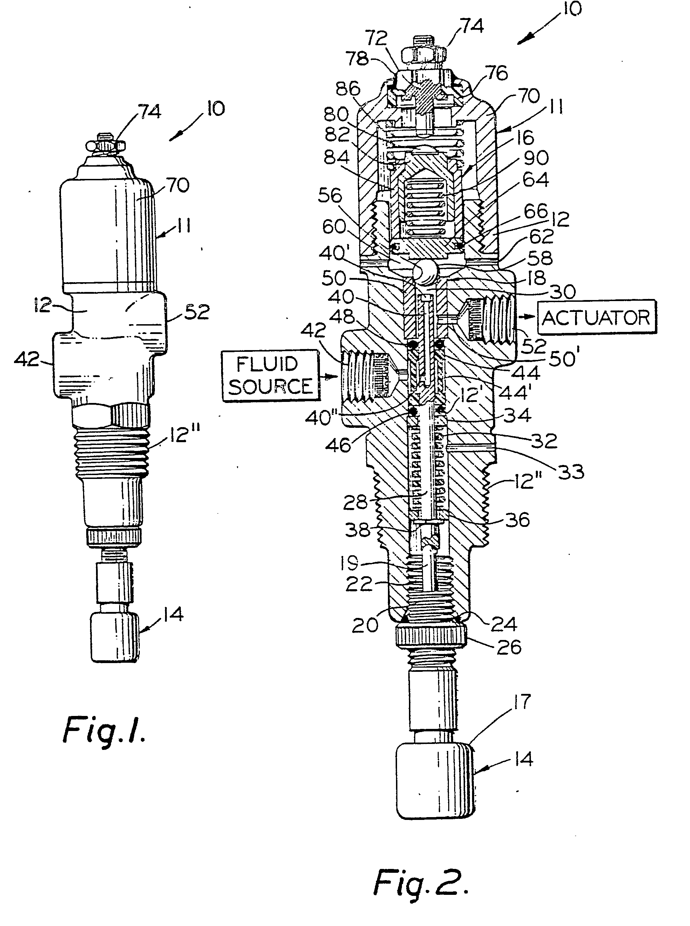

Referring to the first embodiment depicted in Figures 1 and 2, the control device assembly 10 includes a housing 11 having an elongate body 12 with a bore therethrough, at one end of which is threadably mounted a temperature sensitive subassembly 14 which has an operating mechanism extending into the body. At the other end of the housing there is an electrical switch mechanism 16 within a housing cap 70 which is threadably attached and forms that end of the body. Within the body and between its ends there is a fluid flow control valve 18.

The temperature sensitive subassembly 14 includes a sensor bulb 17 filled with a conventional thermoresponsive i.e. thermoexpansion substance, for example a fluid or semi-fluid material which is sealed in the bulb. The substance is arranged to act upon an axially shiftable elongate plunger 19 so that expansion of the substance with increasing temperature at the bulb causes extension and/or movement of plunger 19 further into body 12, while contraction of the substance causes the plunger to retract. External threads 20 on the temperature sensitive subassembly interconnect with internal threads 22 on the body 12 to interconnect these components, the connection being sealed by an O-ring 24 or the like. A lock nut 26 enables the two components to be fixed at a particular position relative to each other to control the limits of movement of plunger 19.

The end of plunger 19 opposite the bulb 17 is convex and engages a concavity in the adjacent axial end of a push rod 28. This push rod extends into a flow passage 30 in the central portion of the body 12. The push rod 28 is biased into engagement with the plunger 19 by a compression coil spring 32 surrounding the push rod within the bore in the body. The spring is axially retained between a pair of spaced washers 34 and 36, washer 36 being fixed relative to the push rod 28 by a snap ring, E-ring or the like 38, and washer 34 being retained in a specific position in the body 12 by a shoulder 12'. A vent port 33 in the body 12 extends between the bore in the portion of the body housing the spring 32 and the ambient atmosphere to prevent compression of the air with movement of the push rod 28 and to vent any fluid leak to the atmosphere.

The inner end of the push rod 28 is hollow forming a passage 40 communicable with the passage 30 through a hollow nose 40' on the axial end of the push rod 28 opposite the end engaging the plunger 19. The opposite end of the passage 40 has a lateral outlet port 40''. Port 40'' is communicable with a lateral fluid inlet port 42 in the body 12, through a port 44' in an annular sleeve 44 around the push rod 28. The sleeve 44 is straddled by a pair of O-ring seals 46 and 48 at its ends, seal 46 abutting the washer 34 and seal 48 being retained in position by a sleeve 50 fixed in the body 12 and into which the end of the plunger 40 may slide freely with clearance between the sleeve and plunger for fluid flow therebetween. The sleeve 50 has a port 50' which communicates with an outlet port 52 in the body 12. The outlet port 52 has connecting threads for a conduit that communicates with an actuator, e.g. a shutter actuator for the engine or an air operated engine fan drive.

At the axial end of sleeve 50 opposite the end into which the push rod 28 extends there is a valve seat 56 which cooperates with a ball valve element 58 to form a valve. This ball valve element is located in a chamber 60 in the body 12, the chamber 60 being open to the ambient atmosphere through a plurality of vents 62. Positioned on the opposite side of ball valve element 58 from valve seat 56 is a plunger 64 having a peripheral seal such as an O-ring 66. This plunger 64 forms a coupling mechanism between the valve assembly and the electrical switch assembly 16, while sealingly separating the two.

The electrical switch assembly 16 is retained in the housing assembly 11 by a cap 70 which is threadably secured to the body. In this first embodiment, the cap 70 has an electrical contact element 72 fixedly retained in the cap 70 and integral with a terminal 74 projecting above the cap. Both the contact element 72 and the terminal 70 are retained in the cap by an electrical insulator 76 and a potting compound seal 78. The inner end of the terminal 72 is axially aligned with a second electrical contact 80 mounted on an electrically conductive cup 82 axially slidable within and retained by a circumferentially surrounding sleeve 84. The sleeve 84 is retained in abutment with the plunger 64 by a first compression coil spring 86 axially retained between the closed axial end of the cap 70 and the sleeve 84. The cup 82 is biased away from the plunger 64 by a second compression coil spring 90 retained between the cup 82 and the plunger 64. The second spring 90 allows further movement of plunger 64 towards the electrical contacts after contacts 72 and 80 have engaged, thereby allowing over travel and preventing damage to the assembly during operation.

Electrical contact 80, by its association with the components, is in electrical ground relationship with the device 10 so that electrical current supplied to the terminal 74 can be grounded to the vehicle engine through the pair of contacts and the body of the device when the device is threadably secured in a port in an engine block via threads 12''.

In operation, the device shown in Figures 1 and 2 is capable of sequentially controlling two engine temperature control mechanisms such as a pneumatically operated shutter actuator and subsequently an electrically actuated indicator such as a light or buzzer, or an electrically actuated solenoid valve to control the engine fan drive or to control a pneumatically operated engine fan drive and subsequently an electrically actuated indicator. In use, the device 10 is secured by the threads 12'' into a threaded port in an engine block (not shown) so that temperature sensitive element 14, and particularly the sensor bulb 17 thereof, projects into the coolant jacket of the engine. When the engine coolant is at a relatively low temperature, the plunger 19 will be retracted towards the bulb, and the compression spring 32 will bias the push rod 28, by means of its open nose 40', away from the ball valve element 58 as shown in Figure 2. Under these conditions, a compressed gaseous fluid, e.g. air, entering the port 42 from a fluid source flows through the opening 44' in the sleeve 44, through the port 40'' into the passage 40 and out through the hollow nose 40', around the upper end of the push rod inside the sleeve 50 to the outlet port 50', and thence through the port 52 to, for example, the shutter actuator to maintain the shutters closed on the radiator of the engine. Ball valve 58 will be in position on its seat 56 to prevent the compressed air escaping through the vent ports 62. Plunger 64, held in engagement with the ball 58 by the compression springs 90 and 86 will cause the contacts 72 and 80 of the switch to be separated as shown, to prevent electrical current flow through the switch mechanism.

As the engine coolant temperature increases, the substance in the bulb 17 expands, extending the plunger 19 which shifts the push rod 28 into the body until the nose 40' is closed by engagement with the ball 58. This prevents further compressed air flow to the actuator of the shutter or the engine fan drive. Further expansion with increasing engine temperature causes the push rod 28 to lift the ball 58 from its seat 56, allowing the compressed air in the shutter actuator to vent through ports 62. Thus, the shutter mechanism is allowed to open (typically under spring bias) to allow cool air to flow through the radiator for cooling the engine coolant. If engine temperature increases even with the shutter mechanism open, the push rod 28 will push ball 58 still further, thereby shifting the plunger 64 against the compression spring 86 until ultimately the electrical contacts 80 and 72 engage. This allows current flow from the terminal 74 through the grounded housing, causing activation of a warning signal or activation of a solenoid valve to the clutch of the engine cooling fan. The fan is operated to increase air flow through the radiator to accelerate cooling. Further expansion of the sensor with increasing engine temperature does not damage the mechanism because the inner spring 90 will compress with axial movement between the elements 82 and 84.

Upon cooling of the engine, the mechanism will operate in reverse, first separating the contacts 72 and 80 for shutting off the fan component or the like activated electrically through the switch assembly, and then allowing the ball valve element 58 to seat and close off the vents 62 and retracting the push rod 28 from the ball 58 for compressed air flow to the shutter actuator to close the shutters at the radiator.

Thus in the device of the present invention, these two functions always occur sequentially, using the same temperature sensor, requiring only one port in the engine block, yet with a relatively simple unit.

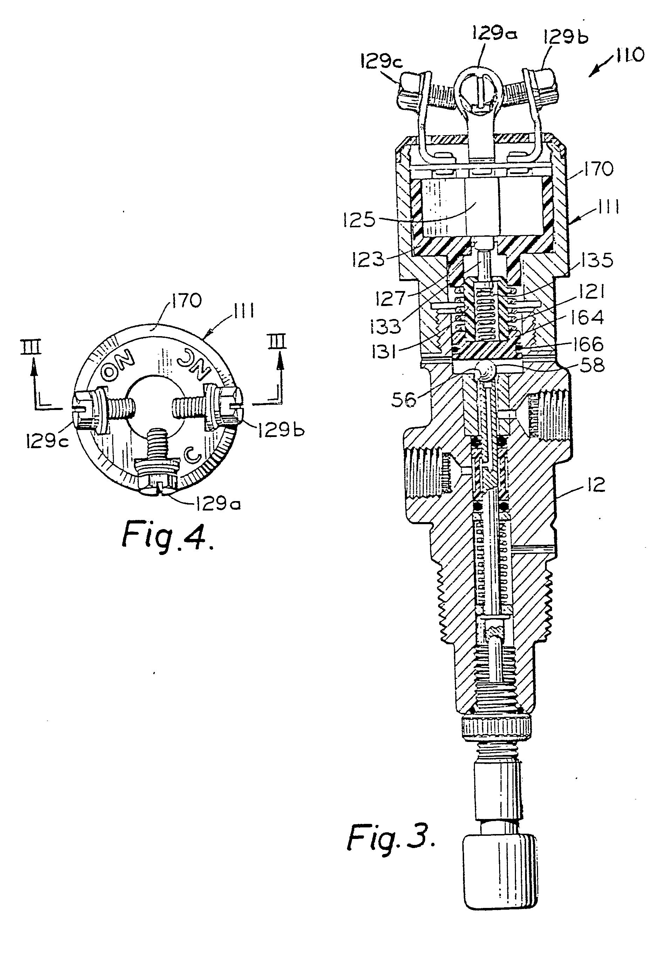

Figures 3 and 4 show the second embodiment 110 of this invention. This embodiment corresponds to that of Figures 1 and 2 regarding the components of the temperature sensitive subassembly 14 and the fluid flow valve. However, it differs from the first embodiment in the form of the plunger that engages the ball element and the electrical switch assembly in the cap. Like reference numerals refer to like parts in these first and second embodiments.

The housing 111 has a cap 170 threaded to the body 12. The internal plunger 164 that physically separates (but functionally interconnects) the valve and the electrical switch is slightly different in configuration to the plunger 64 of the first embodiment, but basically operates in a similar manner. It includes an external seal 166 to seal against flow or leakage between the valve and the switch portions. The plunger 164 is biased toward the ball valve element 58 by a compression coil spring 121 axially retained between the plunger 164 and a polymeric liner 123 that holds the switch assembly 125. This switch assembly 125 is a typical butterfly-type switch, such as a microswitch, having a shiftable actuator 127 projecting from the switch housing. Three terminals 129a, 129b, and 129c, extend from the switch through the end cap 170 which is threadably attached to the body 12 of the valve. This switch mechanism thus includes a common terminal 129a, and a pair of cooperative terminals, one for a normally closed circuit and the other for a normally open circuit, for example. This enables two different functions to be actuated by the electrical switch mechanism when it is shifted. Shifting of the switch mechanism occurs with movement of the plunger 164 towards the switch against the compression of spring 121. This causes movement of the inner sleeve 131 within which is retained a plunger pin 133. The pin 133 engages a second compression coil spring 135 which has less compressive resistance that the spring 121.

Hence, during operation of the apparatus, engine temperature increase causes the valve mechanism to function like that described with reference to the first embodiment. Upon movement of the ball valve element 58 off its seat 56, the plunger 164 is shifted by the ball toward the switch, causing the plunger pin 133 to shift the switch actuator 127 to open a normally closed circuit and close a normally open circuit. If, after the switch is shifted, the plunger 164 continues to move because of further increasing engine temperature, the spring 135 will compress and accommodate the over travel to prevent damage to the switch.

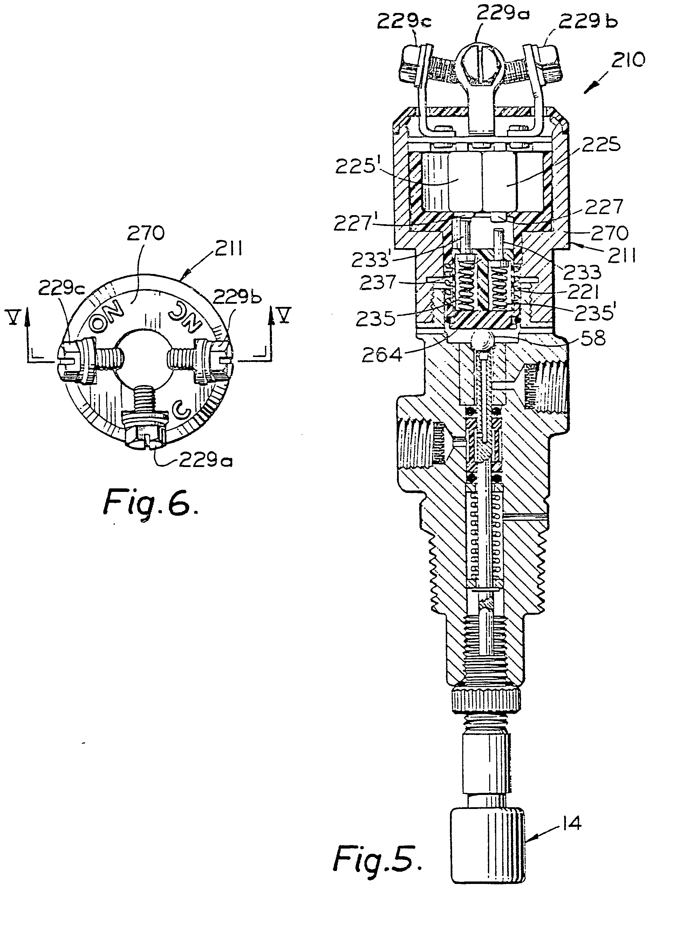

In the third embodiment shown in Figures 5 and 6, the temperature sensing mechanism and the fluid flow valve are again like those in the first and second embodiments, with like numerals referring to like parts. In this embodiment 210, however, the electrical switch assembly differs in that the pair of electrical switching functions are caused to occur sequentially rather than simultaneously as in the second embodiment.

The switch mechanism comprises switches 225 and 225' within the cap 270 of the housing assembly 211. A pair of actuators 227 and 227' project therefrom and are aligned with a pair of plunger pins 233 and 233' respectively. These plunger pins are positioned side-by-side and are retained within a double sleeve 237. These pins project in the axial direction of the device by different amounts so as to be spaced different amounts from the actuators 227 and 227' with which they cooperate respectively. Thus, switch actuator 227' is first engaged and actuated by the plunger pin 233' with a predetermined movement of plunger movement, and only after the main plunger 264 shifts further does the plunger pin 233 engage and actuate actuator 227. The plunger pins 233 and 233' include compression coil springs 235 and 235' respectively which bias then toward the switch actuator and which are compressible after their respective plunger pins engage an actuator, thereby accommodating over travel and preventing damage to the structure with further expansion of the temperature sensitive element. The compression coil spring 221 is axially retained between the plunger 264 and a polymeric liner 223 that houses the switch assembly. This spring biases the plunger towards the ball valve element 58.

Operation of the fluid flow control valve portion of this embodiment is similar to that described with reference to the first embodiment. When the ball valve element 58 shifts the plunger 264 towards the switch assembly the switch 225' will first be actuated by engagement of the plunger pin 233' with the actuator 227'. After further movement of plunger 264, with further expansion of the element 14, the pin 233 engages the actuator 227 to operate the switch 225. These switches can have a common terminal 229a, with one switch 225 being connected to a terminal 229b and the other switch 225' being connected to a terminal 229c. During operation, as the engine temperature increases the fluid flow valve first shifts to actuate the radiator shutter as previously explained. Then, with further heating and movement of the plunger 264, the switch 225' will close to actuate the radiator engine fan through a solenoid valve or the like. Finally, with further temperature increase and actuation of the switch 225, an alarm can sound or appear indicating serious overheating problems. Alternatively or additionally the last switch can automatically shut down the engine under these conditions.

## Claims

1. A temperature sensitive control device comprising a body (12) having a temperature sensitive element (14) at one end including an actuator (28) extending into the body (12), a fluid flow control valve (18) in the body (12) operable by the actuator (28) and being in communication with a fluid inlet port (42) and a fluid outlet port (52) to control a fluid flow function, and an electrical switch mechanism (16) in the body (12) operable to control an electrical function, the valve being arranged to cause coupling means (64) between the valve (18) and the switch mechanism (16) to actuate the switch mechanism sequentially to the operation of the valve (18), characterised in that the coupling means (64) comprises a shiftable plunger (64) which physically and sealingly separates the valve (18) from the switch mechanism (16).

2. A device as claimed in Claim 1 characterised in that the plunger (64) is operable to cause the valve (18) to actuate the switch mechanism (16) indirectly.

3. A device as claimed in Claim 2 characterised in that the switch mechanism (16) comprises a first electrical contact (72) at the end of the body (12) remote from the temperature sensitive element (14) and a second electrical contact (80) in electrical connection with the plunger (64), the two contacts being aligned with respect to the direction of shifting of the plunger (64) whereby the two contacts engage when the plunger (64) is shifted.

4. A device as claimed in any preceding claim characterised in that the switch mechanism (16) includes two switches actuable by the valve (18).

5. A device as claimed in Claim 4 characterised in that the two switches are operable simultaneously by the valve.

6. A device as claimed in Claim 4 characterised in that the two switches (225, 225') are operable sequentially by the valve.

7. A device as claimed in any preceding claim characterised in that the valve (18) includes a valve seat (56) and a valve element (58) and in that the device includes biasing means (86) operable to bias the plunger (64) away from the switch mechanism and into engagement with the valve element (58) thereby also biasing the valve element (58) towards the valve seat (56).

8. A device as claimed in any preceding claim characterised in that the temperature sensitive element (14) includes a thermoexpansion element (19), the valve (18) is a ball valve including a ball (58) and a valve seat (56) and is located between the inlet port (42) and outlet port (52), and the actuator (28) is a slide pin, the pin having an inner hollow nose (40, 40') arranged to engage the ball (58) upon expansion of the thermoexpansion element (14) and to close the hollow nose (40, 40') and also to shift the ball (58) off the valve seat (56) to open the ball valve; the body (12) also including a vent port (62) in the body communicable with the outlet port (52) through the ball valve (18) when the ball valve is open; and in which, when the ball (58) is shifted off its seat (56) it is arranged to engage the plunger (64) to actuate in turn the electrical switch mechanism (16) sequentially to the operation of the valve (18).

## Revendications

1. Dispositif de commande sensible à la température comprenant un corps (12) comportant un élément sensible à la température (14) à une extrémité comprenant un organe d'actionnement (28) qui s'étend dans le corps (12), une soupape de commande de l'écoulement d'un fluide (18) dans le corps (12) pouvant être actionnée par l'organe d'actionnement (28) et en communication avec une lumière d'admission de fluide (42) et avec une lumière de sortie de fluide (52) pour commander une fonction d'écoulement de fluide et un mécanisme d'interrupteur électrique (16) dans le corps (12) pouvant être actionné pour commander une fonction électrique, la soupape, lorsqu'elle a été actionnée, amenant un moyen de couplage (64) qui la relie au mécanisme d'interrupteur (16) à actionner ce mécanisme d'interrupteur, caractérisé en ce que le moyen de couplage (64) comprend un plongeur (64) déplaçable qui sépare physiquement et de manière étanche la soupape (18) du mécanisme d'interrupteur (16).

2. Dispositif suivant la revendication 1, caractérisé en ce que le plongeur (64) peut être actionné pour amener la soupape (18) à faire fonctionner indirectement le mécanisme d'interrupteur (16).

3. Dispositif suivant la revendication 2, caractérisé en ce que le mécanisme d'interrupteur (16) comprend un premier contact électrique (72) à l'extrémité du corps (12) éloignée de l'élément (14) sensible à la température et un second contact électrique (80) connecté électriquement au plongeur (64), les deux contacts étant alignés par rapport à la direction de déplacement du plongeur (64) de sorte que les deux contacts se touchent lorsque le plongeur (64) est déplacé.

4. Dispositif suivant l'une quelconque des revendications précédentes, caractérisé en ce que le mécanisme d'interrupteur (16) comprend deux interrupteurs pouvant être actionnés par la soupape (18).

5. Dispositif suivant la revendication 4, caractérisé en ce que les deux interrupteurs peuvent être actionnés simultanément par la soupape.

6. Dispositif suivant la revendication 4, caractérisé en ce que les deux interrupteurs (225, 225') peuvent être actionnés de manière séquentielle par la soupape.

7. Dispositif suivant l'une quelconque des revendications précédentes, caractérisé en ce que la soupape (18) comprend un siège de soupape (56) et un obturateur (58) et le dispositif comprend un moyen de sollicitation élastique pouvant intervenir pour rappeler le plongeur (64) dans un sens l'écartant du mécanisme d'interrupteur et l'amenant en contact avec l'obturateur (58) de manière à rappeler également l'obturateur (58) vers le siège de soupape (56).

8. Dispositif suivant l'une quelconque des revendications précédentes, caractérisé en ce que l'élément (14) sensible à la température comprend un élément à dilatation thermique (19), la soupape (18) est une soupape à obturateur sphérique comprenant un obturateur sphérique (58) et un siège de soupape (56) et est placée entre la lumière d'admission (42) et la lumière de sortie (52), et l'organe d'actionnement (28) est une broche coulissante, cette broche comportant un bec intérieur creux (40, 40') propre à attaquer l'obturateur sphérique (58) lors d'une dilatation de l'élément à dilatation thermique (14), à fermer le bec creux (40, 40') et ainsi à déplacer l'obturateur sphérique (58) en l'écartant de son siège (56) pour ouvrir la soupape sphérique, le corps (12) comprenant également un évent (62) pouvant communiquer avec la lumière de sortie (52) à travers la soupape sphérique (18) lorsque cette soupape est ouverte et, lorsque l'obturateur sphérique (58) est écarté de son siège (56), il attaque le plongeur (64) pour actionner à son tour le mécanisme d'interrupteur électrique (16) après l'actionnement de la soupape (18).

## Patentansprüche

1. Temperaturempfindliche Steuervorrichtung, umfassend einen Körper (12) mit einem temperaturempfindlichen Element (14) an einem Ende, enthaltend einen sich in den Körper (12) erstreckenden Betätiger (28), ferner im Körper (12) ein die Fluidströmung steuerndes, vom Betätiger (28) zur Wirkung bringbares Ventil (18), in Verbindung stehend mit einer Fluideinlaßöffnung (42) und einer Fluidauslaßöffnung (52) für die Steuerung einer Fluidströmungsfunktion, und einen elektrischen Schaltermechanismus (16) im Körper (12), in Wirkung setzbar für die Steuerung einer elektrischen Funktion, wobei das Ventil Kupplungselemente (64) zwischen dem Ventil (18) und dem Schaltermechanismus (16) veranlaßt, den Schaltermechanismus nachfolgend zur Betätigung des Ventils (18) in Wirkung zu setzen, dadurch gekennzeichnet, daß die Kupplungselemente (64) einen verschiebbaren Kolben (64) umfassen, der körperlich und dichtungsmäßig das Ventil (18) vom Schaltermechanismus (16) trennt.

2. Vorrichtung nach Anspruch 1, dadurch gekennzeichnet, daß der Kolben (64) betätigbar ist, um das Ventil (18) zur indirekten Inbetriebsetzung des Schaltermechanismus (16) zu veranlassen.

3. Vorrichtung nach Anspruch 2, dadurch gekennzeichnet, daß der Schaltermechanismus (16) am Ende des Körpers (12) entfernt vom temperaturempfindlichen Element (14) einen ersten elektrischen Kontakt (72) und einen zweiten, in elektrischer Verbindung mit dem Kolben (64) stehenden elektrischen Kontakt (80) umfaßt, welche beide Kontakte mit Bezug auf die Verschieberichtung des Kolbens (64) ausgerichtet sind, wodurch die beiden Kontakte in Berührung kommen, wenn der Kolben (64) verschoben wird.

4. Vorrichtung nach einem der vorhergehenden Ansprüche, dadurch gekennzeichnet, daß der Schaltermechanismus (16) zwei durch das Ventil (18) betätigbare Schalter umfaßt.

5. Vorrichtung nach Anspruch 4, dadurch gekennzeichnet, daß die beiden Schalter gleichzeitig durch das Ventil betätigbar sind.

6. Vorrichtung nach Anspruch 4, dadurch gekennzeichnet, daß die beiden Schalter (225, 225') durch das Ventil aufeinanderfolgend betätigbar sind.

7. Vorrichtung nach einem der vorhergehenden Ansprüche, dadurch gekennzeichnet, daß das Ventil (18) einen Ventilsitz (56) und ein Ventilelement (58) umfaßt und daß die Vorrichtung Richtkraftelement (86) aufweist, die betätigbar sind, um den Kolben (64) vom Schaltermechanismus weg und in Berührung mit dem Ventilelement (58) zu drücken und dadurch auch das Ventilelement (58) gegen den Ventilsitz (56) zu drücken.

8. Vorrichtung nach einem der vorhergehenden Ansprüche, dadurch gekennzeichnet, daß das temperaturempfindliche Element (14) ein wärmedehnbares Element (19) beinhaltet und daß das Ventil (18) ein Kugelventil mit einer Kugel (58) und einem Ventilsitz (56) ist und zwischen der Einlaßöffnung (42) und der Auslaßöffnung (52) angeordnet ist, daß ferner der Betätiger (28) ein Gleitstift ist, der eine innere hohle Nase (40, 40') besitzt, vorgesehen für den Angriff an der Kugel (58) bei Ausdehnung des wärmedehnbaren Elements (14) und für das Schließen der hohlen Nase (40, 40') und auch für das Wegschieben der Kugel (58) vom Ventilsitz (56), um das Kugelventil zu öffnen, und daß der Körper (12) eine in ihm befindliche Ausgleichsöffnung (62) aufweist, welche über das Kugelventil (18) mit der Auslaßöffnung (52) in Verbindung steht, wenn das Kugelventil offen ist, und daß dann, wenn die Kugel (58) von ihrem Sitz (56) hochgeschoben ist, vorgesehen ist, daß sie am Kolben (64) angreift, um ihrerseits den elektrischen Schaltermechanismus (16) nachfolgend zur Betätigung des Ventils (18) in Wirkung zu setzen.

0 0 13 097

*Fig.1.*

FLUID
SOURCE

ACTUATOR

*Fig.2.*

1

Fig.4.

Fig.3.

Fig.6.

Fig.5.